# EUROPEAN PATENT SPECIFICATION

(11) **EP 2 905 295 B1**
(45) Date of publication and mention of the grant of the patent: **11.12.2019**
(21) Application number: 14000416.9
(22) Date of filing: 05.02.2014
(51) Int. Cl.: C08G 8/00, A23B 4/00, B27N 1/02, B32B 21/08, C09J 11/00

(54) **Synthetic resin composition comprising vinasse**
Synthetische Harzzusammensetzung mit Vinasse
Composition de résine synthétique comprenant de la vinasse

(43) Date of publication of application: 12.08.2015
(73) Proprietor: surfactor Germany GmbH, 45141 Essen (DE)
(72) Inventor: Fricke, Andreas Robert, 39393 OT Neuwegersleben (DE); Struve, Daria, 38126 Braunschweig (DE); Goebel, Peter Michael, 38170 Uehrde/Watzum (DE); Steiner, Matthias, 38170 Vahlberg OT Berklingen (DE)
(74) Representative: von Renesse, Dorothea

(56) References cited:
- FR-A- 515 715
- FR-A1- 2 899 237
- US-A- 1 238 528
- US-A1- 2005 153 043

## Description

### FIELD OF THE INVENTION

The present invention relates to a synthetic resin, comprising at least one hydroxyl aromatic compound, vinasse and at least one aldehyde compound. The invention further relates to a method of preparing said synthetic resin and to the use of said synthetic resin for coating a carrier material or preparing high pressure laminates (HPL) or continuous pressure laminates (CPL).

### BACKGROUND OF THE INVENTION

Phenol formaldehyde resins (PF) are synthetic polymers obtained by the reaction of phenol or substituted phenol with formaldehyde. Phenolic resins are mainly used in the production of circuit boards. They are better known however for the production of molded products including pool balls, laboratory countertops and as coatings and adhesives.

The industrial development of phenolic resins is still continuing despite the long history. Their importance is likely to remain considerable because the raw materials can be obtained at reasonable costs both from petroleum and from coal. Phenolic resins can be used e.g. as raw materials for synthetic fibers and in photoresists for the production of microchips which characterizes the continuing relevance of this group of resins.

As an important application exterior grade composite and panel wood products are bonded with synthetic resins. Hereby, phenolic resins are used in more than 90% of exterior grade composite products. The use of phenol as a toxic chemical is aggravated by the fact that it possesses a relatively high vapor pressure. Hence, there is a need for reducing the phenol content in the respective synthetic resins.

Furthermore, the finite supply of fossil raw materials, associated with an increasing demand for resin based products, has created a need for alternative, environmentally sound resin systems, which have to be provided in uniform and high quality. This challenge has been addressed in the prior art in different ways.

Traditionally, reductions in free phenol levels have been most easily achieved by increasing the formaldehyde to phenol molar ratio. However, this usually tends to increase the level of free formaldehyde in the resin and thus increases the amount of formaldehyde released during processing and curing.

WO 1996/26164 A1 relates to a phenolic resin whereby the emission of phenol is reduced by an excess of formaldehyde, whose emission is reduced by an excess of ammonia which in turn is reacted with a sugar compound to reduce the ammonia emission.

For a reduction of free phenol WO 2008/141042 A1 teaches the preparation of a conventional phenolic resin in the first step followed by removal of the residual phenol (e.g. by heating under vacuum, azeotropic distillation or film evaporation) and subsequent addition of an organic solvent or a dibasic ester. As a result, this production process is still based on a phenol rich resin and requires further technical demanding and costly process steps.

Document FR 515.715 teaches a method for producing a tanning agent by a condensing reaction of phenol and formaldehyde in an alkaline environment. Vinasse can be added before the condensing reaction.

Document FR 2 899 237 refers to wood adhesives. A premix is disclosed which comprises vinasse and/or beet flour. The premix can be used for the production of a resin composition. Formaldehyde shall be partly or fully substituted.

Document US 1,238,528 relates to plastic masses prepared by the aid of formaldehyde. Vinasse may also be used.

US 2005/0153043 A1 teaches a process for producing lignocellulosic board panels. The process comprises providing lignocellulosic material and an adhesive system. The adhesive system comprises (a) a base adhesive resin and (b) an extender and/or filler material comprising sugar beet material. the base adhesive resins may comprise a thermosetting resin such as phenol-formaldehyde.

Hence, there is still a need for an improved phenolic resin which overcomes at least one of the above mentioned disadvantages.

### SUMMARY OF THE INVENTION

This problem is solved by providing a synthetic resin composition comprising at least one hydroxyl aromatic compound, vinasse and at least one aldehyde, whereas the synthetic resin composition comprises the at least one hydroxyl-aromatic compound and the at least one aldehyde in a basic molar ratio of hydroxyl-aromatic compound to aldehyde of between 1:1 and 1:2.5, whereof 10 to 30 wt.-% of the hydroxyl-aromatic compound is substituted by vinasse. Specific embodiments of the invention are subject matter of further independent or dependent claims.

The core aspect of the invention is the finding that vinasse can be used to at least partially substitute the hydroxyl aromatic compounds (i.e. the phenolic compounds) within a resin. Therewith the proportion of hydroxyl aromatic compounds within the resin can be reduced, which results in a considerably more environmentally friendly resin.

Vinasse is an effluent from fermentation industries based upon molasses. Hence it is relatively cheap, in particular less costly than the hydroxyl aromatic compounds usually used for resin production. The synthetic resin of the invention thus reduces the overall production costs.

The inventors could show that the addition of vinasse and therewith a partial substitution of the hydroxyl aromatic compounds in the resin does not have a negative impact on the quality of the resulting synthetic resin. Furthermore, vinasse within the resin does not interfere with the well-established prior art production methods. Hence established materials, production machines and processes can still be applied when the resin according to the invention is used.

In a further aspect, a use of the synthetic resin composition according to the present invention for coating a carrier material, being preferably a board and more preferably a wood-based board, is provided.

In a further aspect, a use of the synthetic resin composition according to the present invention for preparing a high pressure laminate (HPL) or continuous pressure laminate (CPL) is provided.

In a further aspect, a wood-based board, HPL or CPL prepared with a synthetic resin composition according to the present invention is provided.

In a further aspect, a method is provided for preparing a condensated synthetic resin from the synthetic resin composition according to the present invention comprising the following steps:
a) providing a mixture of the phenolic compound and the vinasse;
b) applying a base to adjust the pH value to more than 7.0 and preferably between 8.5 and 10;
c) initiating the polycondensation by addition of an aqueous solution comprising formaldehyde;
d) optionally applying a base to adjust the pH value to the target pH value.

In a further aspect, a method is provided for preparing the condensated synthetic resin from the synthetic resin composition according to the present invention comprising the following steps:
a) providing the phenolic compound;
b) applying a base to adjust the pH value to between 7 and 11;
c) initiating the polycondensation by addition of a solution comprising formaldehyde;
d) adding the vinasse before the reaction mixture of c) is condensated completely.

In a further aspect, a method is provided for preparing the condensated synthetic resin from the synthetic resin composition according to the present invention comprising the following steps:
a) providing a mixture of the phenolic compound, melamine and vinasse;
b) applying a base to adjust the pH value to more than 7.0 and preferably between 9.5 and 10.0;
c) initiating the polycondensation by addition of a solution comprising formaldehyde;
d) optionally applying a base to adjust the pH value to the target pH value.

### DETAILED DESCRIPTION OF THE INVENTION

In the context of the present invention the term "hydroxyl aromatic compound(s)" is synonymously used with the term "phenolics". Both terms define a class of chemical compounds comprising at least one hydroxyl group (-OH) bonded directly to an aromatic hydrocarbon group. Hereby, an aromatic hydrocarbon group (alternatively: "arene") is a cyclic hydrocarbon with 4n+2 delocalized electrons (n = 1, 2, 3, 4, 5 etc.; Hückel's rule) Preferably, the arene is a hydrocarbon with alternating double and single bonds between the carbon atoms forming rings. The class of hydroxyl aromatic compounds encompasses *inter alia* substances such as substituted or unsubstituted phenol, bisnuclear phenol linked through a linking group, resorcinol, phenolic novolacs, and polyvinylphenols, pyrocatechol, pyrogallol, phloroglucinol, resveratrol, apigenein, cardanol and cardol. Also natural phenolic raw materials such as cashew nut shell liquid (CNSL) which contains mostly cardol, cardanol and anacardic acid can be used. Preferrably the hydroxyl aromatic compound is selected from the group consisting of substituted or unsubstituted mononuclear phenol, bisnuclear phenol linked via a linking group, resorcinol, phenolic novolacs, and polyvinylphenols. Most preferred the hydroxyl aromatic compound is phenol.

Other possible hydroxyl aromatic compounds are alpha-naphthol, phenylphenol, cresol, 2-methylphenol, 3-methylphenol, caffeic acid, ferulic acid, coniferyl alcohol, sinapyl alcohol, xylenol derivatives such as 2,5-dimethylphenol and 3,5-dimethylphenol further alkyl phenols, alkoxyphenols such as 2-methoxy- or 3-methoxyphenol, bisphenol-A and bisphenol-F.

In the context of the present invention the term "vinasse" refers to an effluent from the fermentation industries based on molasses. In some countries the term "Condensed Molasses Solubles" or "CMS" is used. According to the invention vinasse is characterized as having an organic dry matter content (DM) of at least wt.- 30%, preferably of at least 40 wt.- %, more preferred of at least 50 wt.- %. In particular preferred embodiments the organic dry matter content is at least 60 wt.-% or even at least 65 wt.-%. Vinasse with a dry matter content of 65 wt.-% or more is considered as being of particular high quality.

The organic dry matter of vinasse comprises raw protein, ash and sugar. The raw protein content of the organic dry matter is at least 5 wt.-%. In preferred embodiments the raw protein content can be at least 10 wt.-%, or at least 30 wt.-%. The ash content of the dry matter can be at least 20 wt.-%, at least 30 wt.-% or even at least 40 wt.-%. The sugar content of the organic dry matter can be at least 1 wt.-%, at least 10 wt.-% or at least 20 wt.-%.

According to the invention the vinasse most preferably has an organic dry matter content of at least 60 wt.-%, whereby said organic matter has a row protein content of at least 10 wt.-%, an ash content of at least 20 wt.-% and a sugar content of at least 2 wt.-%.

Vinasse typically has a pH between 3 and 6, in particular between 4.0 and 5.0 due to the presence of organic acids. However, if needed the pH can be adjusted before applying it according to the invention.

The composition of vinasse varies depending on the origin of the molasses (e.g. sugar cane, sugar beet) and the fermentation process.

Preferably, according to the invention, the following types of vinasse are used:

**Type 1**

| | |
|---|---|
| Organic dry matter (DM): | 58 - 74 wt.-% |
| Raw protein (in % of DM): | 9 - 12 wt.-% |
| Ash content (in % of DM): | 26 - 33 wt.-% |
| Sugar content (in % of DM): | 10 - 16 wt.-% |

This type of vinasse usually derives from sugar cane molasses and alcohol production.

**Type 2**

| | |
|---|---|
| Organic dry matter (DM): | 65 - 67 wt.- % |
| Raw protein (in % of DM): | 33 - 39 wt.- % |
| Ash content (in % of DM): | 34 - 35 wt.- % |
| Sugar content (in % of DM): | 3 - 4 wt.-% |

This type of vinasse usually derives from sugar beet molasses and alcohol production.

**Type 3**

| | |
|---|---|
| Organic dry matter (DM): | 41 - 67 wt.-% |
| Raw protein (in % of DM): | 35 - 37 wt.-% |
| Ash content (in % of DM): | 36 - 38 wt.-% |
| Sugar content (in % of DM): | 1 - 3 wt.- % |

This type of vinasse usually derives from sugar beet molasses and yeast poduction.

According to the invention the vinasse can be selected from the group consisting of sugar cane-vinasse, sugar beet-vinasse, sulfite-alcohol vinasse, wheat vinasse and potassium-reduced vinasse. In a most preferred embodiment vinasse derived from sugar beet molasses (sugar beet vinasse) is used. In a particularily preferred embodiment of the invention vinasse of type 2 or of type 3 (*supra*) is used.

The vinasse can be used in the form of the primary waste product, e.g. as an untreated vinasse. Alternatively, the vinasse can be pre-treated by physical or chemical means. Physical reactions include dilution, water removal, filtration, sonification or homogenization. Chemical reactions encompass *inter alia* oxidation, reduction or precipitation of ingredients by addition of further substances.

In one embodiment of the invention the pH value of the (untreated) vinasse is adjusted prior use according to the invention to the pH value needed for the condensation of the resin and reactivity. The required pH value can depend on the amount and type of vinasse used.

In a preferred embodiment of the invention the pH value of the resin composition comprising vinasse is adjusted to the pH value needed for condensation and reactivity depending of amount and type of vinasse used and the pH value needed for condensation.

In a preferred embodiment the pH of the resin composition comprising vinasse is adjusted to a pH value of between 7 to 11, more preferably to a pH between 8 and 10. Most preferred is a pH about 8.5. These preferred pH values also apply to resins comprising type 1, type 2 or type 3 vinasses or mixtures thereof.

As a preferred base for pH adjustment an alkali metal hydroxide, an earth alkali metal hydroxide, an amine or an inorganic or organic ammonium compound can be used. In a most preferred embodiment, NaOH is used.

The amount of the base (which is preferably NaOH) required for the preparation of the resin depends on the target pH value and the chemical constitution of the vinasse and the components of the resin. The amount of the base especially depends on the amount of the acidic component within the vinasse: The more vinasse is added to the resin the more base has to be added to the resin composition.

The synthetic resin of the invention can contain one, two three or even more types of aldehydes. Hence, in one embodiment the resin of the invention comprises a mixture of at least two different types of aldehydes. In a preferred embodiment, the resin of the invention contains only one type of aldehyde, in particular formaldehyde.

The at least one aldhehyde within the resin composition of the invention is preferably selected from the formaldehyde, formaldehyde precursor (paraformaldehyde, hexamethylene tetramine), acetaldehyde, propionaldehyde, butyraldehyde, glyoxal, malondialdehyde, glutaraldehyd, glutardialdehyd, succindialdehyde. Most preferred is the use of formaldehyde.

The synthetic resin composition according to the invention can comprise vinasse in a proportion of between 10 to 30 wt.-%, preferably of between 15 and 25 wt.-% and more preferably approximately 20 wt.-% of the phenolic compound. This means that according to the invention, up to 30 wt.-% of the phenolic compounds of the resin can be substituted with vinasse.

For the determination or calculation of the amount of vinasse to be applied for the production of the resin composition according to the invention, a formulation protocol for the production of a standard or prior art phenolic resin is used, i.e. the corresponding phenolic resin composition without vinasse (hereinafter also called respective/corresponding standard resin or standard composition). Such resins are resins with a molar ratio of the phenolic compounds to the aldehyde compounds of between 1:1 and 1:2.5. The amount of vinasse used according to the invention is then preferably between 10 wt.% and 30 wt.-%, preferably between 15 wt.-% and 25 wt.-% and most preferred around 20 wt.-% of the phenolic compounds in the standard resin. Consequently the amount of phenolic compounds applied in the resin composition according to the invention can be reduced accordingly, i.e. the phenolic compounds are partially substituted by vinasse.

In one embodiment of the invention alcohol is added to the resin composition in order to increase the shelf life and/or the improvement of penetration into the carrier material (e.g. kraft paper). As defined in the context of the present invention, the term "alcohol" includes aromatic and alkyl alcohols, mono-alcohols, diols, triols and polyols and also oligomeric or polymeric alcohols. In a preferred embodiment an alkyl alcohol is used such as methanol, ethanol or isopropyl alcohol.

In a preferred embodiment of the invention, the synthetic resin composition is a phenolic resin composition. Most preferred is a resol. In another preferred embodiment the phenolic resin is a novolac.

A "resol" is defined as a base-catalysed synthetic resin with a ratio of the aldehyde compounds to the hydroxyl aromatic compounds of greater than one. In a preferred embodiment the resol is a phenol formaldehyde resin. Most preferred the resin has a formaldehyde to phenol ratio of approximately 1 to 1.5.

A "novolac" is defined as a synthetic resin with a ratio of the aldehyde compounds to the hydroxyl aromatic compounds of less than one. In a particular embodiment it is a phenol formaldehyde resin. In a particular embodiment the formaldehyde to phenol ratio is around 0.8 : 1. In novolacs the polymerization is completed by using acid catalysis such oxalic acid, hydrochloric acid or sulfonate acid.

The phenolic resin composition according to the invention can further comprise monomers for co-polymerisation or co-condenation with the phenolic compounds. Preferred further monomers are selected from the group consisting of melamine, urea, dicyandiamide or derivatives thereof. Preferably a melamine-phenol-co-condensate with an aldehyde is formed, whereby up to 30 wt.-% of the phenol is substituted by vinasse (calculated on the basis of the respective standard composition without vinasse). More preferably a melamine-phenol-co-condensate with formaldehyde is formed, whereby up to 30 wt.-% of the phenol is substituted by vinasse.

In yet another embodiment of the invention the resin according the invention can be mixed with one or more resins before curing such as e.g. a melamine-aldehyde, urea-aldehyde or dicyandiamide aldehyde resin. In a preferred embodiment a melamine formaldehyde resin, a urea-formaldehyde resin or a dicyandiamide-formaldehyde resin is used. In a preferred embodiment, a phenol formaldehyde resin according to the invention is mixed with a melamine formaldehyde resin before condensation and/or curing.

The synthetic resin according to the invention can be used for the preparation of a high pressure laminate (HPL) or a continuous pressure laminate (CPL).

"High pressure laminate" (HPL) are laminates which had been cured and processed preferably at pressures of at least 70 bar. The pressure preferably ranges from 70 to 140 bar, more preferably from 70 to 100 bar and most preferably from 70 to 80 bar. The pressing is performed at high temperature ,e.g. at temperatures ranging from 100 to 200°C, preferably from 120 to 180°C and more preferably from 140°C to 160°C. The entire press cycle, including re-cooling, preferably ranges between 30 and 240 minutes, preferably between 60 and 120 minutes and more preferably between 90 and 120 minutes. In a most preferred embodiment of the invention the resin is processed by a HPL production process with a pressure between 70 and 80 bar and a press cycle time of approximately 100 minutes.

"Continuous pressure laminate" (CPL) is defined as a laminate produced by hot pressing in continuously operating presses. Typically the laminate is pressed with a pressure of between 10 bar and 100 bar, preferably with a pressure between 15 and 75 bar and more preferably with a pressure between 25 bar and 50 bar. The pressing is performed as hot pressing with and temperatures ranging from 100 to 200°C, preferably from 120 to 180°C and more preferably from 150°C to 170°C. Depending on the laminate thickness and the length of the pressing zone, the feed rate varies from 4 to 50 m/min, preferably from 8 5o 40 m/min and more preferably from 8 to 30 m/min. In a most preferred embodiment of the invention the resin is processed by a CPL production process with a pressure between 25 and 50 bar, a press temperature between 150 and 170°C and a feed rate between 8 and 30 m/min.

Both qualities, CPL and HPL, are classified and tested in accordance with EN 438-1 and EN 438-2 (2005). The table below provides an excerpt of preferred CPL and HPL properties (as e.g. requested for kitchen worktops).

| **Preferred properties** | **Unit** | **CPL** | **HPL** |
|---|---|---|---|
| Min. thickness | mm | 0,15 | 0,50 |
| Max. thickness | mm | 1,50 | 40,0 |
| Max. depth of structure | µm | 150 | 500 |
| High gloss | - | Limited | Yes |
| Compact laminate (i.e. laminate thickness of ≥ 2mm) | - | No | Yes |

Preferably, a phenol formaldehyde melamine resin, whereby up to 30 wt.-% of the phenol (calculated on the basis of the formulation without vinasse) is substituted by vinasse is used for preparing CPL or HPL.

In a particularly preferred embodiment of the invention the synthetic resin composition, especially when used for CPL, comprises phenol, formaldehyde, melamine, vinasse and NaOH solution in a molar ratio of phenol: formaldehyde: melamine of 1: 2.0 - 4.5:0.1 to 1.0, whereby up to 30 wt.-% of the phenol is substituted by vinasse (the ratio of compounds is calculated on the basis of the standards resion without vinasse).

In a preferred embodiment of the invention said synthetic resin composition, in particular for the use for CPL production, comprises phenol, formaldehyde, melamine, vinasse and NaOH solution in a molar ratio of phenol to formaldehyde to melamine of 1 to 3.05 to 0.6 or 1 to 2.51 to 0.41, whereby up to 30 wt.-% of the phenol is substituted by vinasse (and the molar ratio is calculated on the basis of the respective standard composition without vinasse).

In yet another aspect the invention the resin composition can be used for coating a carrier material, preferably a board and more preferably a wood-based board.

In yet another aspect of the invention a paper impregnated with the synthetic resin according to the invention is attached under pressure and heat to a panel or board in order to provide a coated board or coated panel. In this embodiment the board or panel serves as a support layer. Possible support layers to be coated with an impregnated paper according to the invention are plywood, chipboard, fibre board, oriented strand board (OSB), glue wood, laminated veneer lumber (LVL), parallel strand lumber (PSL) and oriented strand lumber (OSL). The most preferred embodiment is plywood panel. The coated board or panel can be applied in the wood working industry, in particular in construction industry for concrete shuttering.

In another aspect the invention provides a method for preparing a condensed resin of the invention comprising the following steps:
a) providing a mixture of the phenolic compound and vinasse;
b) applying a base to adjust the pH value to more than 7.0 and preferably between 8.5 and 10;
c) initiating the polycondensation by addition of a aqueous solution comprising aldehyde, in particular formaldehyde.

In preferred aspect the invention provides a method for preparing a condensed resin of the invention comprising the following steps:
a) providing the phenolic compound;
b) applying a base to adjust the pH value to between 7 and 11;
c) initiating the polycondensation by addition of a solution comprising aldehyde, in particular formaldehyde;
d) adding the pH adjusted vinasse before the reaction mixture of c) is condensated completely.

The term "condensated resin" as used herein denotes to a resin formed by polycondensation.

In the context of the present invention the term "condensation" or "condensate" is synonymous to the term "curing" and refers to the toughening or hardening of the synthetic resin by polymerization of the monomers. For phenolic resins said polymerization represents a condensation reaction, since two molecules or moieties (functional groups) combine to form a larger molecule, together with the loss of water. The cross-linking of polymer chains can be initiated by chemical additives, ultraviolet radiation, electron beam or heat.

The coated articles according to the invention are described with the following illustrative figures and examples, which should not be interpreted in order to limit the scope of protection.

### EXAMPLES

### Example 1: Preparation of a phenolic resin suitable as surface resin or glue resin

1000 kg phenol is added to the reaction vessel following by the addition of 330 kg vinasse. The pH value is adjusted to 10 by addition of NaOH. 1000 kg of an aqueous 37% formaldehyde solution are slowly added over 15 min to keep the temperature at 64 to 85°C. The condensation is then kept for 10 min at 85 °C. After 10 min additional 1000 kg of an aqueous 37% formaldehyde solution are added within 24 min to keep temperature at 85°C. The condensation is kept for 50 min at 87°C to achieve the end viscosity. When reaching a viscosity of 42 s at 20°C (as determined according DIN EN ISO 2431), the resin is cooled down to room temperature. The resulting resin has a kinematic viscosity of 42 sec when using a viscosity cup with a orifice diameter of 4 mm (acc. DIN EN ISO 2431), a volatile content of 52%, a curing time of 176 sec (so called B-time as determined according DIN 16916) and a pH value of 9.8.

Before impregnation additives such as antifoaming, colorants, release agents and levelling agents, wetting agents are added to the resin.

Phenol formaldehyde resin products are pressed on plywood surface and film tested for curing, for generation of a closed surface, for water penetration, in the boiling test, for suitability as concrete shuttering or for the appearance of cracks.

### Example 2: Preparation of a phenolic resin suitable for a high pressure laminate (HPL)

The resin composition sitable for HPL production is prepared according the procedure of Example 1, whereby the phenol to formaldehyde ratio is 1 to 1.5 and whereby 20% of said phenol is substituted by vinasse (whereby the molar ratio is calculated on the basis of the standard composition without vinasse. The final resin is used to generate a high pressure laminate which is tested according HPL norm DIN EN 438.

### Example 3: Preparation of a phenolic resin suitable for continuous pressure laminate (CPL)

The resin composition suitable for CPL production is prepared according the procedure of Example 1, whereby the phenol to formaldehyde to melamine molar ratio is 1 to 3.05 to 0.6 or 1 to 2.51 to 0.41 and whereby 20% of said phenol is substituted by vinasse (whereby the molar ratio is calculated on the basis of the standard composition without vinasse). The final resin is used to generate a continuous pressure laminate.

## Claims

1. A synthetic resin composition comprising:
a) at least one hydroxyl-aromatic compound,
b) vinasse, and
c) at least one aldehyde
whereas the synthetic resin composition comprises the at least one hydroxyl-aromatic compound and the at least one aldehyde in a basic molar ratio of hydroxyl-aromatic compound to aldehyde of between 1:1 and 1:2.5, whereof 10 to 30 wt.-% of the hydroxyl-aromatic compound is substituted by vinasse.

2. The synthetic resin composition according to claim 1, whereas the hydroxyl-aromatic compound is selected from the group consisting of substituted or unsubstituted mononuclear phenol, bisnuclear phenol linked through a linking group, resorcinol, phenolic novolacs, and polyvinylphenols, and preferably is phenol.

3. The synthetic resin composition according to claim 1 or 2, whereas the vinasse is selected from the group consisting of cane-vinasse, beet-vinasse, sulfite-alcohol vinasse, wheat vinasse and potassium-reduced vinasse.

4. The synthetic resin composition according to claims 1 to 3, whereas the vinasse is a liquid vinasse.

5. The synthetic resin composition according to any of the preceding claims, whereas the aldehyde is selected from the group consisting of formaldehyde or a formaldehyde precursor, acetaldehyde, propionaldehyde, butyraldehyde, glyoxal, malondialdehyde and succindialdehyde; and preferably is formaldehyde.

6. The synthetic resin composition according to any of the preceding claims, whereas the synthetic resin composition comprises the vinasse in a proportion of between 10 to 30 wt.-%, preferably of between 15 and 25 wt.-% and more preferably of 20 wt.-% as related to the hydroxyl-aromatic compound.

7. The synthetic resin composition according to any one of the preceding claims, whereas said composition is a resol or a novolac.

8. The synthetic resin according to any one of the preceding claims comprising a further condensation partner of the group consisting of melamine, urea and dicyandiamide.

9. The synthetic resin composition according to any of the preceding claims comprising phenol, formaldehyde and vinasse in a basic molar ratio of phenol to formaldehyde of between 1 to 1.0 and 1 to 2.5, and whereby up to 30 wt.-% of the phenol is substituted by vinasse.

10. The synthetic resin composition according to any of the claims 1 to 9 comprising phenol, formaldehyde, vinasse and NaOH solution in a basic molar ratio of phenol to formaldehyde of between 1 to 1 and 1 to 2, whereby up to 30 wt.-% of the phenol is substituted by vinasse.

11. The synthetic resin composition according to any of the claims 1 to 9 comprising phenol, formaldehyde, melamine, vinasse and NaOH solution in a basic molar ratio of phenol to formaldehyde to melamine of 1 to between 2.0 and 4.5 to between 0.1 and 1.0 whereby up to 30 wt.-% of the phenol is substituted by vinasse.

12. Use of the synthetic resin composition according to any one of the preceding claims for coating a carrier material, being preferably a board and more preferably a wood-based board.

13. Use of the synthetic resin composition according to any one of claims 1 to 11 for preparing a high pressure laminate (HPL) or continuous pressure laminate (CPL).

14. Wood-based board, HPL or CPL prepared with a synthetic resin composition according to any of the claims 1 to 11.

15. Method for preparing a condensated synthetic resin from the synthetic resin composition according to any one of the claims 1 to 10 comprising the following steps:
a) providing a mixture of the phenolic compound and the vinasse;
b) applying a base to adjust the pH value to more than 7.0 and preferably between 8.5 and 10;
c) initiating the polycondensation by addition of an aqueous solution comprising formaldehyde;
d) optionally applying a base to adjust the pH value to the target pH value.

16. Method for preparing the condensated synthetic resin from the synthetic resin composition according to any one of the claims 1 to 10 comprising the following steps:
a) providing the phenolic compound;
b) applying a base to adjust the pH value to between 7 and 11;
c) initiating the polycondensation by addition of a solution comprising formaldehyde;
d) adding the vinasse before the reaction mixture of c) is condensated completely.

17. Method for preparing the condensated synthetic resin from the synthetic resin composition according to any one of the claims 1 to 8 or claim 11 comprising the following steps:
a) providing a mixture of the phenolic compound, melamine and vinasse;
b) applying a base to adjust the pH value to more than 7.0 and preferably between 9.5 and 10.0;
c) initiating the polycondensation by addition of a solution comprising formaldehyde;
d) optionally applying a base to adjust the pH value to the target pH value.

## Patentansprüche

1. Synthetische Harzzusammensetzung, umfassend:
a) wenigstens eine hydroxylaromatische Verbindung,
b) Vinasse und
c) wenigstens ein Aldehyd,
wobei die synthetische Harzzusammensetzung die wenigstens eine hydroxylaromatische Verbindung und das wenigstens eine Aldehyd in einem grundlegenden Molverhältnis von hydroxylaromatischer Verbindung zu Aldehyd von zwischen 1:1 und 1:2,5 umfasst, wobei 10 bis 30 Gew.-% der hydroxylaromatischen Verbindung durch Vinasse ersetzt sind.

2. Synthetische Harzzusammensetzung gemäß Anspruch 1, wobei die hydroxylaromatische Verbindung ausgewählt ist aus der Gruppe bestehend aus substituiertem oder unsubstituiertem einkernigem Phenol, zweikernigem Phenol, das über eine Verknüpfungsgruppe verknüpft ist, Resorcinol, phenolischen Novolaken und Polyvinylphenolen, und vorzugsweise Phenol ist.

3. Synthetische Harzzusammensetzung gemäß Anspruch 1 oder 2, wobei die Vinasse ausgewählt ist aus der Gruppe bestehend aus Zuckerrohrvinasse, Rübenvinasse, Sulfit-Alkohol-Vinasse, Weizenvinasse und kaliumreduzierter Vinasse.

4. Synthetische Harzzusammensetzung gemäß Ansprüchen 1 bis 3, wobei die Vinasse eine flüssige Vinasse ist.

5. Synthetische Harzzusammensetzung gemäß einem der vorstehenden Ansprüche, wobei das Aldehyd ausgewählt ist aus der Gruppe bestehend aus Formaldehyd oder einem Formaldehyd-Vorläuferstoff, Acetaldehyd, Propionaldehyd, Butyraldehyd, Glyoxal, Malondialdehyd und Succindialdehyd; und vorzugsweise Formaldehyd ist.

6. Synthetische Harzzusammensetzung gemäß einem der vorstehenden Ansprüche, wobei die synthetische Harzzusammensetzung die Vinasse in einem Anteil von zwischen 10 und 30 Gew.-%, vorzugsweise zwischen 15 und 25 Gew.-% und bevorzugter 20 Gew.-%, bezogen auf die hydroxylaromatische Verbindung, umfasst.

7. Synthetische Harzzusammensetzung gemäß einem der vorstehenden Ansprüche, wobei die Zusammensetzung ein Resol oder ein Novolak ist.

8. Synthetische Harzzusammensetzung gemäß einem der vorstehenden Ansprüche, umfassend einen weiteren Kondensationspartner aus der Gruppe bestehend aus Melamin, Harnstoff und Dicyandiamid.

9. Synthetische Harzzusammensetzung gemäß einem der vorstehenden Ansprüche, umfassend Phenol, Formaldehyd und Vinasse in einem grundlegenden Molverhältnis von Phenol zu Formaldehyd von zwischen 1 zu 1,0 und 1 zu 2,5, wobei bis zu 30 Gew.-% des Phenols durch Vinasse ersetzt sind.

10. Synthetische Harzzusammensetzung gemäß einem der Ansprüche 1 bis 9, umfassend Phenol, Formaldehyd, Vinasse und NaOH-Lösung in einem grundlegenden Molverhältnis von Phenol zu Formaldehyd von zwischen 1 zu 1 und 1 zu 2, wobei bis zu 30 Gew.-% des Phenols durch Vinasse ersetzt sind.

11. Synthetische Harzzusammensetzung gemäß einem der Ansprüche 1 bis 9, umfassend Phenol, Formaldehyd, Melamin, Vinasse und NaOH-Lösung in einem grundlegenden Molverhältnis von Phenol zu Formaldehyd zu Melamin von 1 zu zwischen 2,0 und 4,5 zu zwischen 0,1 und 1,0, wobei bis zu 30 Gew.-% des Phenols durch Vinasse ersetzt sind.

12. Verwendung der synthetischen Harzzusammensetzung gemäß einem der vorstehenden Ansprüche zum Beschichten eines Trägermaterials, das vorzugsweise eine Platte und bevorzugter eine Platte auf Holzbasis ist.

13. Verwendung der synthetischen Harzzusammensetzung gemäß einem der Ansprüche 1 bis 11 zum Herstellen eines Hochdrucklaminats (HPL) oder eines Continuous-Pressure-Laminats (CPL).

14. Platte auf Holzbasis, HPL oder CPL, hergestellt mit einer synthetischen Harzzusammensetzung gemäß einem der Ansprüche 1 bis 11.

15. Verfahren zur Herstellung eines kondensierten synthetischen Harzes aus der synthetischen Harzzusammensetzung gemäß einem der Ansprüche 1 bis 10, umfassend die folgenden Schritte:
a) Bereitstellen eines Gemischs der Phenolverbindung und der Vinasse;
b) Anwenden einer Base, um den pH-Wert auf höher als 7,0 und vorzugsweise zwischen 8,5 und 10 einzustellen;
c) Auslösen der Polykondensation durch Zugeben einer wässrigen Lösung, die Formaldehyd umfasst;
d) gegebenenfalls Anwenden einer Base, um den pH-Wert auf den Ziel-pH-Wert einzustellen.

16. Verfahren zur Herstellung des kondensierten synthetischen Harzes aus der synthetischen Harzzusammensetzung gemäß einem der Ansprüche 1 bis 10, umfassend die folgenden Schritte:
a) Bereitstellen der Phenolverbindung;
b) Anwenden einer Base, um den pH-Wert auf zwischen 7 und 11 einzustellen;
c) Auslösen der Polykondensation durch Zugeben einer Lösung, die Formaldehyd umfasst;
d) Zugeben der Vinasse, bevor das Reaktionsgemisch von c) vollständig kondensiert ist.

17. Verfahren zur Herstellung des kondensierten synthetischen Harzes aus der synthetischen Harzzusammensetzung gemäß einem der Ansprüche 1 bis 8 oder Anspruch 11, umfassend die folgenden Schritte:
a) Bereitstellen eines Gemischs der Phenolverbindung, Melamin und Vinasse;
b) Anwenden einer Base, um den pH-Wert auf höher als 7,0 und vorzugsweise zwischen 9,5 und 10,0 einzustellen;
c) Auslösen der Polykondensation durch Zugeben einer Lösung, die Formaldehyd umfasst;
d) gegebenenfalls Anwenden einer Base, um den pH-Wert auf den Ziel-pH-Wert einzustellen.

## Revendications

1. Composition de résine synthétique comprenant :
a) au moins un composé aromatique hydroxylé,
b) de la vinasse, et
c) au moins un aldéhyde
où la composition de résine synthétique comprend le au moins un composé aromatique hydroxylé et le au moins un aldéhyde selon un rapport molaire basique de composé aromatique hydroxylé pour aldéhyde compris entre 1:1 et 1:2,5, où de 10 à 30 % en poids du composé aromatique hydroxylé est substitué par de la vinasse.

2. Composition de résine synthétique selon la revendication 1, dans laquelle le composé aromatique hydroxylé est sélectionné parmi le groupe constitué d'un phénol mononucléaire substitué ou non substitué, d'un phénol binucléaire ponté par un groupement de liaison, du résorcinol, des novolaques phénoliques, et des polyvinylphénols, et de préférence est le phénol.

3. Composition de résine synthétique selon la revendication 1 ou 2, dans laquelle la vinasse est sélectionnée parmi le groupe constitué de la vinasse de canne à sucre, de la vinasse de betterave, de la vinasse d'alcool-sulfite, de la vinasse de blé et de la vinasse réduite au potassium.

4. Composition de résine synthétique selon les revendications 1 à 3, dans laquelle la vinasse est une vinasse liquide.

5. Composition de résine synthétique selon l'une quelconque des revendications précédentes, dans laquelle l'aldéhyde est sélectionné parmi le groupe constitué du formaldéhyde ou d'un précurseur de formaldéhyde, de l'acétaldéhyde, du propionaldéhyde, du butyraldéhyde, du glyoxal, du malondialdéhyde et du succindialdéhyde ; et de préférence est le formaldéhyde.

6. Composition de résine synthétique selon l'une quelconque des revendications précédentes, où la composition de résine synthétique comprend la vinasse dans une proportion comprise entre 10 et 30 % en poids, de préférence entre 15 et 25 % en poids et de façon davantage préférée de 20 % en poids par rapport au composé aromatique hydroxylé.

7. Composition de résine synthétique selon l'une quelconque des revendications précédentes, où ladite composition est un résol ou une novolaque.

8. Composition de résine synthétique selon l'une quelconque des revendications précédentes, comprenant un partenaire de condensation supplémentaire parmi le groupe constitué de la mélamine, de l'urée et du dicyandiamide.

9. Composition de résine synthétique selon l'une quelconque des revendications précédentes, comprenant du phénol, du formaldéhyde et de la vinasse selon un rapport molaire basique de phénol pour formaldéhyde compris entre 1 pour 1 et 1 pour 2,5, et où jusqu'à 30 % en poids du phénol est substitué par de la vinasse.

10. Composition de résine synthétique selon l'une quelconque des revendications 1 à 9, comprenant du phénol, du formaldéhyde, de la vinasse et une solution de NaOH selon un rapport molaire basique de phénol pour formaldéhyde compris entre 1 pour 1 et 1 pour 2 , et où jusqu'à 30 % en poids du phénol est substitué par de la vinasse.

11. Composition de résine synthétique selon l'une quelconque des revendications 1 à 9, comprenant du phénol, du formaldéhyde, de la mélamine, de la vinasse et une solution de NaOH selon un rapport molaire basique de phénol pour formaldéhyde pour mélamine de 1 pour entre 2,0 et 4,5 pour entre 0,1 et 1,0, et où jusqu'à 30 % en poids du phénol est substitué par de la vinasse.

12. Utilisation de la composition de résine synthétique selon l'une quelconque des revendications précédentes, afin de revêtir un matériau de support, qui est de préférence un panneau et de façon davantage préférée un panneau à base de bois.

13. Utilisation de la composition de résine synthétique selon l'une quelconque des revendications 1 à 11, afin de préparer un stratifié haute pression (HPL) ou un stratifié pression continue (CPL).

14. Panneau à base de bois, stratifié HPL ou stratifié CPL préparé avec une composition de résine synthétique selon l'une quelconque des revendications 1 à 11.

15. Procédé de préparation d'une résine synthétique condensée à partir de la composition de résine synthétique selon l'une quelconque des revendications 1 à 10, comprenant les étapes suivantes :
a) fournir un mélange du composé phénolique et de la vinasse ;
b) appliquer une base pour ajuster le pH à une valeur supérieure à 7,0 et de préférence comprise entre 8,5 et 10 ;
c) initier la polycondensation par ajout d'une solution aqueuse comprenant du formaldéhyde ;
d) optionnellement appliquer une base pour ajuster le pH à la valeur de pH cible.

16. Procédé de préparation de la résine synthétique condensée à partir de la composition de résine synthétique selon l'une quelconque des revendications 1 à 10, comprenant les étapes suivantes :
a) fournir le composé phénolique ;
b) appliquer une base pour ajuster le pH à une valeur comprise entre 7 et 11 ;
c) initier la polycondensation par ajout d'une solution comprenant du formaldéhyde ;
d) ajouter la vinasse avant que le mélange réactionnel de c) ne se soit condensé complètement.

17. Procédé de préparation de la résine synthétique condensée à partir de la composition de résine synthétique selon l'une quelconque des revendications 1 à 8 ou la revendication 11, comprenant les étapes suivantes :
a) fournir un mélange du composé phénolique, de la mélamine et de la vinasse ;
b) appliquer une base pour ajuster le pH à une valeur supérieure à 7,0 et de préférence comprise entre 9,5 et 10,0 ;
c) initier la polycondensation par ajout d'une solution comprenant du formaldéhyde ;
d) optionnellement appliquer une base pour ajuster le pH à la valeur de pH cible.
